# FASCICULE DE BREVET EUROPEEN

(11) **EP 1 166 157 B1**
(45) Date de publication et mention de la délivrance du brevet: **09.07.2003**
(21) Numéro de dépôt: 00912738.2
(22) Date de dépôt: 24.03.2000
(51) Int. Cl.: G02B 3/14, G02B 26/02

(54) **DISPOSITIF DE CENTRAGE D'UNE GOUTTE**
TROPFENZENTRIERUNGSVERFAHREN
DROP CENTERING DEVICE

(30) Priorité: 26.03.1999 FR 9903980
(43) Date de publication de la demande: 02.01.2002
(73) Titulaire: UNIVERSITE JOSEPH FOURIER, 38041 Grenoble Cédex 9 (FR)
(72) Inventeur: BERGE, Bruno, F-38140 Reaumont (FR)
(74) Mandataire: de Beaumont, Michel
(86) Numéro de dépôt international: FR0000751
(87) Numéro de publication internationale: WO00058763

(56) Documents cités:
- WO-A-96/41227
- WO-A-97/43731
- DE-A- 19 710 668
- FR-A- 2 769 375
- US-A- 5 659 330

## Description

La présente invention concerne le maintien d'une goutte de liquide dans une position prédéterminée sur une surface solide, et plus particulièrement le centrage d'une telle goutte.

On peut pour diverses raisons vouloir maintenir une goutte posée sur une surface, centrée avec précision sur un axe prédéterminé. Un moyen connu consiste à modifier autour de cet axe la mouillabilité de la surface par rapport au liquide de la goutte.

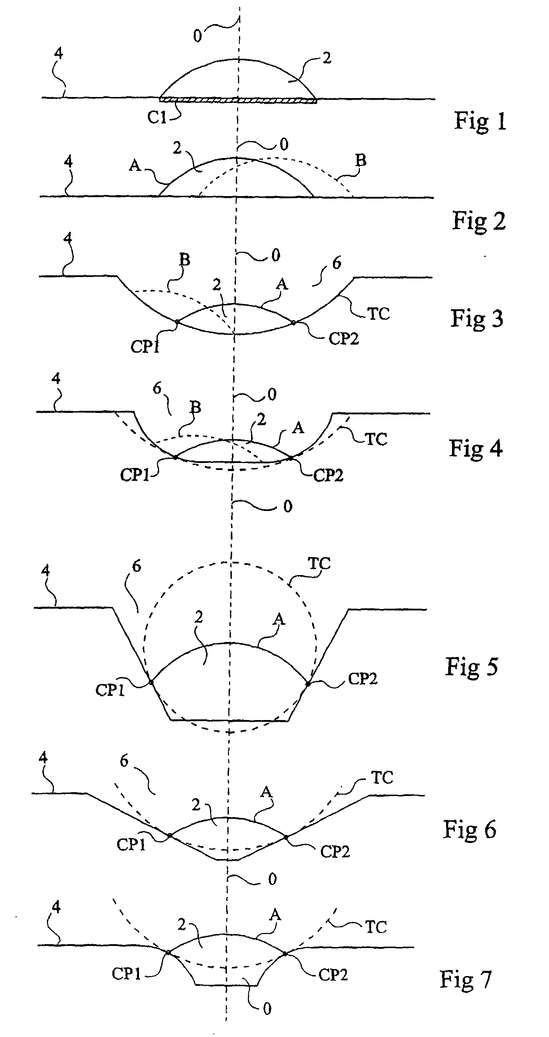

La figure 1 représente une vue de côté en coupe d'une goutte de liquide 2 posée sur une surface 4. La surface 4 a été traitée selon une zone circulaire C1 centrée sur un axe O. Le traitement de la zone C1 est tel que sa mouillabilité vis-à-vis du liquide de la goutte 2 est forte. Ainsi, les forces de capillarité maintiennent la goutte 2 centrée sur l'axe O.

Une amélioration, non représentée, d'un tel traitement de surface consiste à créer autour de l'axe O plusieurs zones concentriques circulaires. Le traitement de ces zones est alors tel que plus une zone est proche de l'axe O, plus sa mouillabilité vis-à-vis du liquide de la goutte 2 est forte. Une telle amélioration permet un centrage de la goutte 2 pour différents angles de contact. Ceci est particulièrement intéressant lorsque l'on dispose d'un moyen de changer celui-ci, par exemple à l'aide d'une tension électrique. De tels traitements de surface peuvent cependant être délicats et coûteux à mettre en oeuvre.

Un objet de la présente invention est de centrer une goutte posée sur une surface sans avoir recours à une modification de la mouillabilité de la surface.

Pour atteindre cet objet, la présente invention prévoit un procédé de centrage d'une goutte de liquide autour d'un axe prédéterminé à un emplacement donné d'une surface, qui consiste à former à cet emplacement un évidement évasé tel que, en tout point de la limite de contact entre la goutte et l'évidement, celui-ci a une courbure inférieure ou opposée à celle d'un cercle tangent à la surface de l'évidement audit point et en un point symétrique de cette surface par rapport audit axe de centrage.

Selon un mode de réalisation de la présente invention, l'évidement évasé a la forme d'un tronc de cône d'axe perpendiculaire à ladite surface.

Selon un mode de réalisation de la présente invention, l'évidement évasé a la forme de la partie supérieure centrale d'un tore d'axe perpendiculaire à ladite surface.

Selon un autre aspect de la présente invention, on prévoit un procédé de centrage d'une goutte de liquide autour d'un axe prédéterminé sur la surface externe d'une surface convexe, qui consiste à conférer à cette surface en tout point de la limite de contact avec la goutte une forme telle que cette surface soit de courbure supérieure à celle d'un cercle tangent à cette surface en ce point et en un point symétrique de cette surface par rapport audit axe de centrage.

Selon un mode de réalisation de la présente invention, on forme la surface convexe par révolution autour dudit axe d'un arc de cercle de rayon inférieur à celui dudit cercle tangent.

La présente invention prévoit aussi une lentille à focale variable mettant en oeuvre le procédé susmentionné qui comprend une paroi en un matériau isolant, une goutte d'un premier liquide isolant disposée sur une zone d'une première face de la paroi, un deuxième liquide conducteur recouvrant la première face et la goutte, les premier et deuxième liquides étant non miscibles, d'indices optiques différents et sensiblement de même densité, et des moyens pour appliquer une tension électrique entre le liquide conducteur et une électrode disposée sur la deuxième face de ladite paroi, la goutte étant placée dans un évidement évasé de la paroi.

Selon un mode de réalisation de la présente invention, l'électrode est une tôle métallique, l'évidement évasé est un tronc de cône formé par emboutissage de ladite tôle, centré sur un axe perpendiculaire à la première face, et dont le fond est percé d'un trou centré, et la paroi en matériau isolant est un film plastique transparent plaqué à l'électrode et aux parois de l'évidement et qui recouvre ledit trou.

Selon un mode de réalisation de la présente invention, l'électrode est une plaque métallique, l'évidement évasé est un tronc de cône formé par usinage de ladite plaque, centré sur un axe perpendiculaire à la première face, et dont le fond est percé d'un trou centré, et la paroi en matériau isolant est un film plastique transparent plaqué à l'électrode et aux parois de l'évidement et qui recouvre ledit trou.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, décrite précédemment, représente une vue de côté en coupe d'un moyen de centrage d'une goutte selon l'art antérieur ;
la figure 2 représente une vue de côté en coupe d'une goutte de liquide posée sur une surface plane ;
les figures 3 à 7 sont des vues de côté en coupe d'une goutte de liquide placée dans un évidement évasé d'une surface ;
les figures 8 à 10 sont des vues de côté en coupe d'une goutte de liquide située à une extrémité d'une tige de préhension de goutte ;
la figure 11 représente une vue de côté en coupe d'une application de la présente invention au centrage d'une goutte de liquide transparent utilisée comme lentille ; et
la figure 12 représente une vue de côté en coupe d'une variante de la figure 11.

De mêmes éléments seront désignés par de mêmes références dans les figures qui suivent. En particulier, la référence 2 désignera une goutte de liquide de petites dimensions dont la position sur une surface sera essentiellement définie par les forces de capillarité (la tension superficielle). La référence 4 désignera une surface dont la mouillabilité est constante vis-à-vis du liquide de la goutte 2.

La figure 2 représente une surface 4 plane coupée par un axe O orthogonal à cette surface. Si l'on cherche à placer une goutte de liquide à une position A centrée sur l'axe O, par exemple en la déposant à partir d'une tige de préhension de goutte, on a peu de chance d'y arriver avec précision, la goutte restant là où elle est posée, par exemple à une position B.

Comme cela est illustré en figure 3, pour résoudre le problème du centrage d'une goutte 2 par rapport à un axe O, l'inventeur a d'abord pensé à placer la goutte 2 dans un évidement formé dans la surface 4, cet évidement ayant la forme d'une calotte sphérique symétrique par rapport à l'axe O. Cependant, il s'est avéré que toute position de la goutte 2 dans l'évidement 6 est une position stable. Ainsi, comme dans le cas d'une surface 4 plane, si on cherche à placer la goutte 2 à une position A centrée sur l'axe O, on a peu de chance d'y arriver avec précision car la goutte restera là où elle aura été posée, par exemple, à une position B.

Dans un premier temps, l'inventeur a donc abandonné l'idée du centrage d'une goutte au moyen d'un évidement. Ainsi, la demande de brevet FR 2 769 375 A déposée par le présent demandeur décrit une lentille liquide à focale variable formée par une goutte de liquide posée à la surface d'un solide, centrée sur un axe par les moyens décrits en relation avec la figure 1. Cette demande décrit en outre des moyens électromagnétiques pour déformer la goutte tout en la maintenant centrée sur l'axe.

D'autre part, cette demande de brevet décrit une lentille liquide à focale variable formée par une goutte de liquide contenue dans un tube et maintenue centrée sur l'axe du tube par capillarité. Il apparaît ainsi qu'on peut centrer une goutte 2 sur un axe O en la plaçant dans un évidement cylindrique de la surface 4, centré sur cet axe. Cependant, il est difficile de placer une goutte de liquide dans un tel évidement cylindrique en évitant qu'il demeure une bulle à la base de la goutte.

L'inventeur a alors recherché systématiquement quel type d'évidement centré sur un axe O permet sans difficultés de centrer une goutte de liquide sur cet axe.

Les figures 4 à 7 représentent chacune une vue de côté en coupe d'une goutte de liquide 2 placée dans un évidement évasé 6 centré sur un axe 0 et formé dans une surface 4. Pour une position A de la goutte 2, centrée sur l'axe O, on appelle CP1 un point quelconque de la limite de contact entre la goutte 2 et la surface de l'évidement 6. On appelle cercle tangent TC le cercle, dont le centre est situé sur l'axe O, et qui est tangent à la surface de l'évidement à la fois au point CP1 et en un point CP2 symétrique.

La figure 4 représente une goutte de liquide 2 placée dans un évidement 6 formé par la révolution autour de l'axe O d'un arc de cercle de rayon inférieur à celui du cercle TC précédent. Ainsi, en tout point CP1 de la limite de contact entre la surface de l'évidement et la goutte, la courbure de la surface de l'évidement est supérieure à celle du cercle TC.

La figure 5 représente une goutte de liquide 2 placée dans un évidement 6 formé par révolution d'un segment de droite autour de l'axe O. L'évidement 6 est un tronc de cône. Ainsi, en tout point CP1 de la limite de contact avec la goutte, la courbure de la surface de l'évidement 6 est nulle, inférieure à celle du cercle tangent TC.

La figure 6 représente une goutte de liquide 2 placée dans un évidement 6 formé par révolution autour de l'axe O d'un arc de cercle de rayon supérieur à celui du cercle TC précédent. Ainsi, en tout point CP1 de la limite de contact avec la goutte, la courbure de la surface de l'évidement est inférieure à celle du cercle tangent TC.

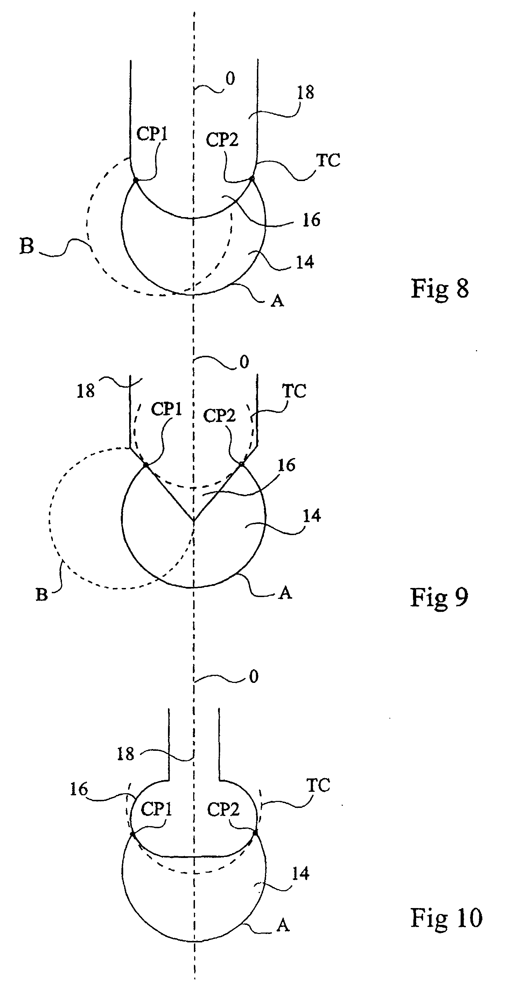

La figure 7 représente une goutte de liquide 2 placée dans un évidement 6 formé par révolution autour de l'axe O d'un arc de cercle de courbure opposée à celle du cercle tangent TC. L'évidement 6 correspond à la partie supérieure centrale d'un tore. En tout point CP1 de la limite de contact avec la goutte, la courbure de la surface de l'évidement 6 est opposée à celle du cercle tangent TC.

L'inventeur a mis en évidence que, pour une goutte 2 placée dans un évidement 6 évasé centré sur un axe O, la courbure de la surface de l'évidement 6 en tout point CP1 de la limite de contact avec la goutte détermine si une position A de la goutte, centrée sur l'axe O, est une position d'équilibre ou non.

Ainsi, lorsque comme en figures 5, 6 et 7, la courbure en tout point CP1 est inférieure ou inverse à celle du cercle tangent TC, une goutte placée dans un tel évidement prend naturellement une position A centrée sur l'axe O.

D'autre part, lorsque comme en figure 4 la courbure en tout point CP1 est supérieure à celle du cercle tangent TC, une position A de la goutte, centrée sur l'axe O, est particulièrement instable et ne pourra pas être maintenue. Une goutte placée dans un tel évidement prend naturellement une position B décentrée par rapport à l'axe O.

Enfin, lorsque comme en figure 3 la courbure en tout point CP1 est égale à celle du cercle tangent TC, toute position de la goutte est stable, et une goutte placée dans un tel évidement à une position B décentrée conservera cette position.

Ainsi, la présente invention prévoit un procédé de centrage d'une goutte selon la première revendication.

On notera que seule compte la limite de contact entre la goutte et la surface de l'évidement. La forme du fond de l'évidement n'a pas d'importance et elle pourra être plate, convexe ou concave.

Selon un autre aspect de l'invention, on considère une surface convexe de mouillabilité uniforme, centrée sur un axe O, sur laquelle est posée une goutte de liquide, dans une position A centrée sur l'axe O. On considère de nouveau le point CP1 et le cercle tangent TC décrits précédemment.

Les figures 8 à 10 sont des vues de côté en coupe d'une goutte de liquide 14 placée sur une surface convexe 16 centrée sur un axe O.

La figure 8 représente le cas où la surface convexe est sphérique. La surface de la sphère 16 en tout point CP1 de la limite de contact avec la goutte 14 est toujours confondue avec le cercle tangent TC.

Dans le cas de la figure 9 la surface convexe est conique. La "courbure" de la surface conique 16 en tout point CP1 de la limite de contact avec la goutte 14 est toujours inférieure à celle du cercle tangent TC.

Dans le cas de la figure 10 la surface convexe est formée par révolution autour de l'axe O d'un arc de cercle de rayon inférieur à celui du cercle tangent TC. La courbure de la surface en tout point CP1 de la limite de contact avec la goutte 14 est toujours supérieure à celle du cercle tangent TC.

L'inventeur a mis en évidence que, pour une goutte 14 placée sur une surface convexe 16 centrée sur un axe O, la courbure en tout point CP1 de la limite de contact avec la goutte détermine si une position A de la goutte, centrée sur l'axe O, est une position d'équilibre ou non.

Ainsi, lorsque comme en figure 10, la courbure en tout point CP1 est supérieure à celle du cercle tangent TC, une goutte placée sur une telle surface prend naturellement une position A centrée sur l'axe O.

Par contre, lorsque comme en figure 9 la courbure en tout point CP1 est inférieure à celle du cercle tangent TC, une position A de la goutte, centrée sur l'axe O, est instable. Une goutte placée sur une telle surface prend naturellement une position B décentrée par rapport à l'axe O.

Enfin, lorsque comme en figure 8 la courbure en tout point CP1 est égale à celle du cercle tangent TC, toute position de la goutte est stable, et une goutte placée à une position B décentrée conservera cette position.

Ainsi, la présente invention prévoit un procédé de centrage d'une goutte sur une surface convexe qui consiste, en tout point CP1 de la limite de contact avec la goutte, à conférer à la surface une courbure supérieure à celle du cercle tangent TC.

Selon une application de ce procédé, la surface convexe 16 constitue l'extrémité d'une tige 18 de préhension d'une goutte 14. En effet, pour certaines manipulations chimiques ou biologiques, il est souhaitable de disposer de tiges de préhension de goutte qui permettent de manipuler des gouttes de liquide avec précision et fiabilité. Une tige de préhension de goutte dont l'extrémité est formée selon la présente invention, permet de transporter des gouttes centrées de manière certaine.

On va maintenant décrire une application de la présente invention à la réalisation d'un moyen de centrage d'une goutte de liquide utilisée comme lentille optique.

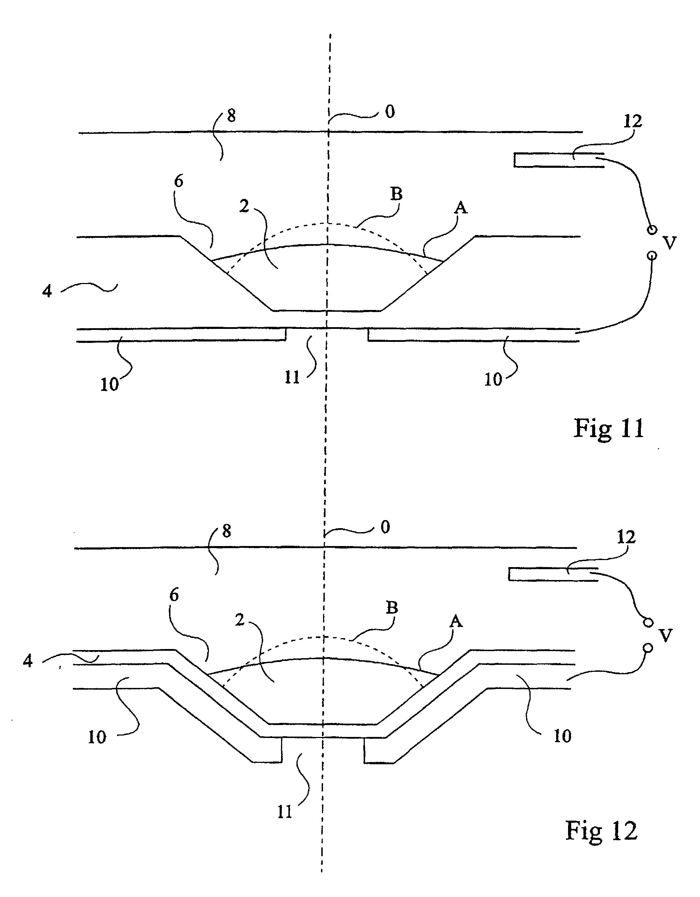

La figure 11 représente une vue en coupe simplifiée d'une telle lentille liquide à focale variable, formée dans une enceinte diélectrique 4 remplie d'un liquide conducteur 8. Le diélectrique 4 présente naturellement une faible mouillabilité vis-à-vis du liquide conducteur 8. Une face intérieure d'une paroi de l'enceinte 4 comprend un évidement 6, centré autour d'un axe O perpendiculaire à cette paroi. L'évidement 6 est un tronc de cône selon la présente invention, tel que celui représenté en figure 5. Une goutte d'un liquide isolant 2 est placée dans l'évidement 6. Comme on l'a vu précédemment, la goutte de liquide isolant 2 prend naturellement une position A centrée sur l'axe O. Le liquide isolant 2 et le liquide conducteur 8 sont tous les deux transparents, non miscibles, sont d'indices optiques différents et ont sensiblement la même densité. Le dioptre formé entre les liquides 8 et 2 constitue une face d'une lentille liquide dont l'axe optique est l'axe O et dont l'autre face correspond au contact entre la goutte et le fond de l'évidement. Une électrode 10, comprenant un trou 11 au voisinage de l'axe O, est placée sur la face extérieure de la paroi de l'enceinte diélectrique 4. Une électrode 12 est en contact avec le liquide conducteur 8. L'électrode 12 peut être immergée dans le liquide 8, ou bien être un dépôt conducteur réalisé sur une paroi interne de l'enceinte 4. Une source de tension (non représentée) permet d'appliquer une tension V entre les électrodes 10 et 12.

On peut faire croître la tension V de 0 volt à une tension maximale qui dépend des matériaux utilisés. Lorsque la tension croît, la goutte de liquide isolant 2 se déforme jusqu'à atteindre une position limite (désignée par la référence B). Tandis que la goutte 2 se déforme de sa position A à sa position B, la focale de la lentille liquide varie.

On notera que, la goutte 2 étant en un liquide isolant, il ne se produit pas de microgouttes à sa périphérie quand la tension V est élevée, contrairement à ce qui se produirait si la goutte était en un liquide conducteur.

La forme conique de l'évidement 6 est telle que, quelle que soit la forme de la goutte 2 qu'il contient, la courbure de sa surface en tout point de contact entre la limite de la goutte et la surface, est inférieure à celle d'un cercle tangent TC passant en ce point. Ainsi, selon un aspect de la présente invention, l'évidement 6 est tel que, tout au long de sa déformation de sa position A à sa position B, la goutte de liquide 2 est continûment maintenue centrée sur l'axe O. On dispose ainsi d'une lentille liquide dont l'axe optique reste fixé avec précision, et dont la focale varie avec la tension V.

On notera qu'un évidement 6 selon la présente invention, qui assure le centrage continu de la goutte de liquide 2, est relativement simple à mettre en oeuvre et qu'il remplace avantageusement les moyens de centrage électromagnétiques ou par traitement de surface décrits dans la demande de brevet français susmentionnée.

On utilisera de préférence comme tension V une tension alternative, afin d'éviter l'accumulation de charges électriques dans l'épaisseur du matériau 4, à partir de la surface sur laquelle est posée la goutte 2.

A titre d'exemple on pourra utiliser comme liquide conducteur 8 de l'eau chargée en sels (minéraux ou autres) ou tout liquide, organique ou non, qui soit conducteur ou rendu tel par ajout de composés ioniques. Comme liquide isolant 2, on pourra utiliser de l'huile, un alcane ou mélange d'alcanes, éventuellement halogénés, ou tout autre liquide isolant et non miscible avec le liquide conducteur 8. La paroi diélectrique 4 peut être une plaque de verre ou une superposition de polymère fluoré, de résine époxy, de polyéthylène. L'électrode 10 peut être un dépôt métallique.

La figure 12 représente une vue en coupe simplifiée d'une variante de réalisation de la lentille liquide à focale variable de la figure 11. De mêmes références désignent de mêmes éléments en figures 11 et 12. Dans ce mode de réalisation, l'électrode 10 peut être une tôle métallique dans laquelle l'évidement 6 est formé par emboutissage. Elle peut également être une paroi métallique dans laquelle on a formé l'évidement 6 par usinage puis polissage. La paroi 4 est alors, par exemple, un mince film plastique transparent plaqué sur l'électrode 10 et qui recouvre le trou 11. Ce film plastique pourra par exemple être plaqué par thermoformage.

Dans l'exemple d'application de la figure 12, la goutte 2 a un diamètre au repos d'environ 1 à 5 mm. Le liquide conducteur 8 et le liquide isolant de la goutte 2 étant sensiblement de même densité, la goutte 2 a la forme d'une calotte sphérique. Lorsqu'elle est au repos (position A), le bord de la goutte 2 fait un angle d'environ 45 degrés avec la surface de l'évidement 6, si ce dernier est un cône ayant une pente de 45 degrés. Dans sa position limite (position B), le bord de la goutte 2 fait un angle d'environ 90 degrés avec la surface de l'enceinte 4. Le dispositif décrit, utilisant comme liquide conducteur 8 de l'eau salée d'indice optique 1,35 et comme liquide isolant de la goutte 2 de l'huile d'indice optique 1,45, permet d'obtenir environ 30 dioptries de variation de focale pour une tension appliquée de 250 V et une puissance électrique dissipée de quelques mw. La fréquence de la tension alternative est dans ce cas comprise entre 100 et 10000 Hz, sa période étant nettement inférieure au temps de réponse du système d'environ quelques centièmes de seconde.

La lentille à focale variable selon la présente invention peut avoir une taille comprise entre quelques centaines de µm et quelques dizaines de mm et peut notamment être appliquée au domaine des systèmes optoélectroniques, d'endoscopie, d'imagerie et de vision.

Bien entendu, la présente invention est susceptible de diverses variantes et modifications qui apparaîtront à l'homme du métier. En particulier, la présente description a été faite en rapport avec des évidements ayant une section circulaire, c'est-à-dire formés par rotation autour d'un axe O. Cependant, on pourra par exemple prévoir des évidements allongés, ayant la forme d'un canal. Dans ce cas, on considérera les figures 5 à 7 comme décrivant la vue en coupe d'un canal, et l'axe O représentera le plan de symétrie dudit canal.

D'autre part, on a représenté en figure 11 un évidement 6 à fond plat, qui entraîne que la lentille liquide est une lentille plan-convexe. Or, on a vu que la forme du fond de l'évidement 6 n'influe pas sur ses propriétés de centrage de la goutte 2. Ainsi, on pourra réaliser sans difficultés des lentilles bi-convexes ou en ménisque en modifiant la courbure du fond de l'évidement 6.

D'autre part également, on a représenté en figures 11 et 12 un mode de réalisation d'une lentille à focale variable utilisant un évidement conique tel qu'en figure 5, mais on adaptera sans difficultés la présente invention à une lentille à focale variable utilisant une autre forme d'évidement selon la présente invention.

Enfin, on pourra réaliser un dispositif comportant un réseau formé de groupes de trois lentilles à focale variable, commandées séparément, colorées en rouge, vert, bleu, fonctionnant par exemple en tout ou rien, permettant de laisser passer ou d'arrêter la lumière provenant d'une source unique de lumière blanche, formant ainsi un écran couleur lumineux pouvant être de très grande taille et de coût modéré.

## Revendications

1. Procédé de centrage d'une goutte de liquide (2) autour d'un axe (O) prédéterminé à un emplacement donné d'une surface (4), **caractérisé en ce qu'**il consiste à former à cet emplacement un évidement évasé (6) tel que, en tout point (CP1) de la limite de contact entre la goutte et l'évidement, celui-ci a une courbure inférieure ou opposée à celle d'un cercle (TC) tangent à la surface de l'évidement audit point et en un point symétrique (CP2) de cette surface par rapport audit axe (O) de centrage.

2. Procédé selon la revendication 1, **caractérisé en ce que** l'évidement évasé (6) a la forme d'un tronc de cône d'axe perpendiculaire à ladite surface.

3. Procédé selon la revendication 1, **caractérisé en ce que** l'évidement évasé (6) a la forme de la partie supérieure centrale d'un tore d'axe perpendiculaire à ladite surface.

4. Procédé de centrage d'une goutte de liquide (14) autour d'un axe (O) prédéterminé sur la surface externe d'une surface convexe (16), **caractérisé en ce qu'**il consiste à conférer à cette surface en tout point (CP1) de la limite de contact avec la goutte une forme telle que cette surface soit de courbure supérieure à celle d'un cercle (TC) tangent à cette surface en ce point et en un point symétrique (CP2) de cette surface par rapport audit axe (O) de centrage.

5. Procédé selon la revendication 4, **caractérisé en ce qu'**il consiste à former la surface convexe (16) par révolution autour dudit axe d'un arc de cercle de rayon inférieur à celui dudit cercle tangent.

6. Lentille à focale variable comprenant :
une paroi en un matériau isolant (4),
une goutte d'un premier liquide isolant (2) disposée sur une zone d'une première face de la paroi,
un deuxième liquide conducteur (8) recouvrant la première face et la goutte, les premier et deuxième liquides étant non miscibles, d'indices optiques différents et sensiblement de même densité, et
des moyens (12) pour appliquer une tension électrique (V) entre le liquide conducteur et une électrode (10) disposée sur la deuxième face de ladite paroi,
où ladite paroi présente un évidement évasé (6) ayant une courbure permettant d'y centrer ladite goutte conformément au procédé de la revendication 1.

7. Lentille à focale variable selon la revendication 6, **caractérisée en ce que** :
l'électrode (10) est une tôle métallique,
l'évidement évasé (6) est un tronc de cône formé par emboutissage de ladite tôle, centré sur un axe (O) perpendiculaire à la première face, et dont le fond est percé d'un trou (11) centré, et
la paroi en matériau isolant (4) est un film plastique transparent plaqué à l'électrode et aux parois de l'évidement et qui recouvre ledit trou.

8. Lentille à focale variable selon la revendication 6, **caractérisée en ce que** :
l'électrode (10) est une plaque métallique,
l'évidement évasé (6) est un tronc de cône formé par usinage de ladite plaque, centré sur un axe (O) perpendiculaire à la première face, et dont le fond est percé d'un trou (11) centré, et
la paroi en matériau isolant (4) est un film plastique transparent plaqué à l'électrode et aux parois de l'évidement et qui recouvre ledit trou.

## Patentansprüche

1. Verfahren zum Zentrieren eines Flüssigkeitstropfens (2) um eine vorgegebene Achse (O) bei einer gegebenen Position einer Oberfläche (4), **dadurch gekennzeichnet, daß** bei dieser Position eine konisch erweiterte Vertiefung (6) gebildet wird, so daß bei jedem Punkt (CP1) der Kontaktgrenze zwischen dem Tropfen und der Vertiefung diese eine Krümmung aufweist, die kleiner oder entgegengesetzt der eines Kreises (TC) ist, welcher die Oberfläche der Vertiefung bei diesem Punkt sowie bei einem Punkt (CP2) dieser Oberfläche, der symmetrisch in bezug auf die Zentrierungsachse (O) ist, berührt.

2. Verfahren nach Anspruch 1, **dadurch gekennzeichnet, daß** die konisch erweiterte Vertiefung (6) die Form eines Kegelstumpfs hat, der eine zu dieser Oberfläche senkrechte Achse aufweist.

3. Verfahren nach Anspruch 1, **dadurch gekennzeichnet, daß** die konisch erweiterte Vertiefung (6) die Form des oberen mittleren Teils eines Torus hat, der eine zur Oberfläche senkrechte Achse aufweist.

4. Verfahren zum Zentrieren eines Flüssigkeitstropfens (14) um eine vorgegebene Achse (0) auf der Außenfläche einer konvexen Oberfläche (16), **dadurch gekennzeichnet, daß** dieser Oberfläche bei jedem Punkt (CP1) der Kontaktgrenze zu dem Tropfen eine Form verliehen wird, so daß diese Oberfläche eine Krümmung hat, die größer als die eines Kreises (TC) ist, der diese Oberfläche bei diesem Punkt und bei einem Punkt (CP2) dieser Oberfläche, der symmetrisch in bezug auf die Zentrierungsachse (0) ist, berührt.

5. Verfahren nach Anspruch 4, **dadurch gekennzeichnet, daß** die konvexe Oberfläche (16) durch Drehung eines Kreisbogens, der einen kleineren Radius hat als der berührende Kreis, um diese Achse gebildet wird.

6. Linse mit variabler Brennweite, mit folgenden Merkmalen:
eine Wand aus einem isolierenden Material (4),
ein Tropfen aus einer ersten isolierenden Flüssigkeit (2), der auf einem Bereich einer
ersten Oberfläche der Wand angeordnet ist,
einer zweiten leitenden Flüssigkeit (8), welche die erste Oberfläche und den Tropfen bedeckt, wobei die erste und die zweiten Flüssigkeit nicht mischbar sind und unterschiedliche optische Brechungsindizes und im wesentlichen die gleiche Dichte haben, und
Mittel (12) zum Anlegen einer elektrischen Spannung (V) zwischen der leitenden Flüssigkeit und einer Elektrode (10), die auf der zweiten Oberfläche der Wand angeordnet ist,
wobei die Wand eine konisch erweiterte Vertiefung (6) mit einer Krümmung aufweist, welche geeignet ist, den Tropfen gemäß dem Verfahren nach Anspruch 1 zu zentrieren.

7. Linse mit variabler Brennweite nach Anspruch 6, **dadurch gekennzeichnet, daß**
die Elektrode (10) ein Metallblech ist,
die konisch erweiterte Vertiefung (6) ein Kegelstumpf ist, der durch Ziehen des Metallblechs gebildet ist und zu einer Achse (O) zentriert ist, welche senkrecht zur ersten Oberfläche ist, wobei am Boden der Vertiefung ein zentriertes Loch (11) gestanzt ist, und
die Wand aus dem isolierenden Material (4) ein transparenter Kunststofffilm ist, der auf die Elektrode und die Wände der Vertiefung plattiert ist und das Loch überdeckt.

8. Linse mit variabler Brennweite nach Anspruch 6, **dadurch gekennzeichnet, daß**
die Elektrode (10) eine Metallplatte ist,
die konisch erweiterte Vertiefung (6) ein Kegelstumpf ist, der durch Bearbeiten der Metallplatte gebildet ist und zu einer zur ersten Oberfläche senkrechten Achse (O) zentriert ist, wobei am Boden der Vertiefung ein zentriertes Loch (11) gestanzt ist, und die Wand aus dem isolierenden Material (4) ein transparenter Kunststofffilm ist, der auf die Elektrode und die Wände des Lochs plattiert ist und das Loch bedeckt.

## Claims

1. A method for centering a liquid drop (2) around a predetermined axis (0) at a given location of a surface (4), **characterized in that** it consists of forming at this location a flared hollow (6) such that, at any point (CP1) of the contact limit between the drop and the hollow, said hollow has a curvature smaller than or opposite to that of a circle (TC) tangent to the hollow surface at said point and at a symmetrical point (CP2) of this surface with respect to said centering axis (O).

2. The method of claim 1, **characterized in that** the flared hollow (6) has the shape of a truncated cone with an axis perpendicular to said surface.

3. The method of claim 1, **characterized in that** the flared hollow (6) has the shape of the upper central portion of a torus having an axis perpendicular to the surface.

4. A method for centering a liquid drop (14) around a predetermined axis (O) on the external surface of a convex surface (16), **characterized in that** it consists of giving this surface at any point (CP1) of the contact limit with the drop a shape such that this surface has a curvature greater than that of a circle (TC) tangent to this surface at this point and at a symmetrical point (CP2) of this surface with respect to said centering axis (O).

5. The method of claim 4, **characterized in that** it consists of forming the convex surface (16) by revolution against said axis of an arc of a circle having a radius smaller than that of said tangent circle.

6. A variable-focus lens, including:
a wall made of an isolating material (4),
a drop of a first isolating liquid (2) arranged on an area of a first surface of the wall,
a second conductive liquid (8) covering the first surface and the drop, the first and second liquids being non-miscible, having different optical indexes and substantially the same density, and
means (12) for applying an electric voltage (V) between the conductive liquid and an electrode (10) arranged on the second surface of said wall,
wherein said wall includes a flared hollow (6) having a curvature adapted to centering said drop according to the method of claim 1.

7. The variable-focus lens of claim 6, **characterized in that**:
the electrode (10) is a sheet metal,
the flared hollow (6) is a truncated cone formed by embossing said sheet metal, centered on an axis (O) perpendicular to the first surface, and the bottom of which is pierced with a centered hole (11), and
the isolating material wall (4) is a transparent plastic film flattened against the electrode and the walls of the hollow, and which covers said hole.

8. The variable-focus lens of claim 6, **characterized in that**:
the electrode (10) is a sheet metal,
the flared hollow (6) is a truncated cone formed by machining said sheet metal, centered on an axis (O) perpendicular to the first surface, and the bottom of which is pierced with a centered hole (11), and
the isolating material wall (4) is a transparent plastic film flattened against the electrode and the walls of the hollow, and which covers said hole.
